# EUROPÄISCHE PATENTSCHRIFT

(11) **EP 3 339 633 B1**
(45) Veröffentlichungstag und Bekanntmachung des Hinweises auf die Patenterteilung: **25.11.2020**
(21) Anmeldenummer: 16206465.3
(22) Anmeldetag: 22.12.2016
(51) Int. Cl.: F03D 1/06, F03D 80/30

(54) **VERFAHREN ZUR HERSTELLUNG EINER POTENTIALAUSGLEICHSVERBINDUNG AN EINEM WINDENERGIEANLAGENROTORBLATT**
METHOD FOR PRODUCING AN EQUIPOTENTIAL BONDING CONNECTION TO A WIND ENERGY ASSEMBLY ROTOR BLADE
PROCÉDÉ DE FABRICATION D'UNE LIAISON ÉQUIPOTENTIELLE SUR UNE PALE DE ROTOR D'ÉOLIENNE

(43) Veröffentlichungstag der Anmeldung: 27.06.2018
(73) Patentinhaber: Nordex Energy GmbH, 22419 Hamburg (DE)
(72) Erfinder: Lipka, Thomas, 18055 Rostock (DE); Klein, Hendrik, 18147 Rostock (DE)
(74) Vertreter: Hauck Patentanwaltspartnerschaft mbB

(56) Entgegenhaltungen:
- EP-A1- 1 965 076
- EP-A1- 3 058 220
- WO-A1-2007/128314
- WO-A1-2011/080177
- DE-B4-102009 003 405

## Beschreibung

Die Erfindung betrifft ein Verfahren zur Herstellung einer Potentialausgleichsverbindung zwischen zwei Komponenten einer Blitzschutzeinrichtung eines Windenergieanlagenrotorblatts.

Windenergieanlagenrotorblätter enthalten Blitzschutzeinrichtungen zur Ableitung von Blitzströmen, die mehrere elektrisch leitfähige Komponenten aufweisen, zum Beispiel Blitzrezeptoren und Blitzschutzleiter. Bei einem Blitzschlag fließen für sehr kurze Zeit sehr hohe Ströme durch diese Komponenten, was zu hohen Potentialdifferenzen infolge elektromagnetischer Induktion führen kann. Um Überschläge zwischen den unterschiedlichen Komponenten und damit einhergehende Beschädigungen des Windenergieanlagenrotorblatts zu vermeiden, werden in der Regel Potentialausgleichsverbindungen hergestellt, insbesondere zwischen parallel angeordneten Leitern. Über diese Verbindungen werden Potentialdifferenzen ausgeglichen. Zugleich können sie gegebenenfalls eine Aufteilung eines Blitzstroms auf mehrere Komponenten bewirken oder den gesamten Blitzstrom führen. Zur Herstellung der Potentialausgleichsverbindungen sind zwei grundsätzlich unterschiedliche Verfahren bekannt geworden.

Einerseits können im Inneren des Windenergieanlagenrotorblatts angeordnete Verbindungsleiter verwendet werden. Beispielsweise zeigt die Druckschrift EP 1 664 528 B1 ein Windenergieanlagenrotorblatt mit Blitzrezeptoren in Form von metallischen Gewindebolzen, die in einer Rotorblattwandung angeordnet und mit unterschiedlichen Verbindungselementen verschraubt sind. Hierzu zählen an einem Steg befestigte Verbindungsleiter, die jeweils einen Blitzrezeptor an einer Saugseite und einen Blitzrezeptor an einer Druckseite miteinander verbinden. Zugleich sind die Verbindungsleiter mit elektrisch leitfähigen Hauptgurten verbunden.

Andererseits kann eine an der Außenseite des Windenergieanlagenrotorblatts angeordnete Potentialausgleichsverbindung geschaffen werden. Ein Beispiel ist aus der Druckschrift EP 2 930 358 A1 bekannt geworden, in der an der Druck- und Saugseite angeordnete Blitzschutzleiter über um die Profilendkante herumgeführte Potentialausgleichsschienen verbunden werden.

Aus der Druckschrift DE 10 2009 003 405 B4 ist ein Windenergieanlagenrotorblatt mit Blitzrezeptoren bekannt geworden, die in eine Wandung des Windenergieanlagenrotorblatts integriert sind. In einem Ausführungsbeispiel weist einer der Blitzrezeptoren einen entfernbaren Abschnitt auf, der eine Zugangsöffnung zu einem Innenraum des Windenergieanlagenrotorblatts verschließt. Durch diese Zugangsöffnung soll ein im Inneren des Windenergieanlagenrotorblatts entlang einem Steg verlaufender Verbindungsleiter an einem der Zugangsöffnung gegenüberliegenden Blitzrezeptor befestigt werden können.

Aus der Druckschrift WO 2014/200333 A1 ist eine Vorrichtung zur Befestigung eines Blitzrezeptors an einer Wandung eines Windenergieanlagenrotorblatts bekannt geworden. Hierzu werden ein inneres und ein äußeres Befestigungselement verwendet. Der Blitzrezeptor kann entweder von der Außenseite des Rotorblatts aus an dem inneren Befestigungselement befestigt werden, oder gemeinsam mit dem inneren Befestigungselement von der Innenseite des Rotorblatts aus an dem äußeren Befestigungselement.

Die Druckschrift WO 2011/080177 A1 beschreibt ein Windenergieanlagenrotorblatt mit einer Blitzschutzeinrichtung, die einen in einem Hohlraum des Windenergieanlagenrotorblatts verlaufenden Blitzschutzleiter und damit verbundene, elektrisch leitfähige Beschichtungen an einer Außenseite des Windenergieanlagenrotorblatts aufweist.

Davon ausgehend ist es die Aufgabe der Erfindung, ein Verfahren zur Verfügung zu stellen, das die Herstellung einer Potentialausgleichsverbindung zwischen zwei Komponenten einer Blitzschutzeinrichtung eines Windenergieanlagenrotorblatts vereinfacht, sowie ein Windenergieanlagenrotorblatt, dass eine einfach herzustellende Potentialausgleichsverbindung aufweist.

Diese Aufgabe wird gelöst durch das Verfahren mit den Merkmalen des Anspruchs 1. Vorteilhafte Ausgestaltungen sind in den Unteransprüchen angegeben.

Das Verfahren dient zur Herstellung einer Potentialausgleichsverbindung zwischen zwei Komponenten einer Blitzschutzeinrichtung eines Windenergieanlagenrotorblatts und weist die folgenden, in der angegebenen Reihenfolge auszuführenden Schritte auf:
a) Bereitstellen eines Windenergieanlagenrotorblatts, das zwei Rotorblatthalbschalen mit jeweils einer Anschluss- und Befestigungseinheit aufweist, die mit einer der beiden Komponenten der Blitzschutzeinrichtung verbunden oder verbindbar ist, wobei im Inneren des Windenergieanlagenrotorblatts zwischen den beiden Anschluss- und Befestigungseinheiten ein Freiraum ausgebildet ist,
b) Einführen eines Verbindungsleiters von einer Außenseite des Windenergieanlagenrotorblatts aus durch eine Durchgangsöffnung einer der beiden Anschluss- und Befestigungseinheiten hindurch in das Innere des Windenergieanlagenrotorblatts,
c) Befestigen der beiden Enden des Verbindungsleiters an jeweils einer der Anschluss- und Befestigungseinheiten, so dass der Verbindungsleiter den Freiraum überbrückt.

Die Anschluss- und Befestigungseinheiten bilden jeweils eine Schnittstelle zwischen dem Verbindungsleiter und einer der beiden Komponenten der Blitzschutzeinrichtung. Sie weisen Befestigungsmittel zur Befestigung eines Endes des Verbindungsleiters auf, beispielsweise ein Gewinde zum Herstellen einer Schraubverbindung oder eine Klemme zum Herstellen einer Klemmverbindung. An den Enden des Verbindungsleiters können komplementär ausgebildete Befestigungsmittel ausgebildet sein, zum Beispiel ebenfalls ein Gewinde, eine Öse oder ein Klemmabschnitt. Es ist daher einfach, die Enden des Verbindungsleiters jeweils mit einer zugehörigen Anschluss- und Befestigungseinheit zu verbinden.

Die Anschluss- und Befestigungseinheiten sind jeweils mit einer Komponente der Blitzschutzeinrichtung verbunden oder verbindbar. Dabei spielt es für die Erfindung keine Rolle, ob eine unmittelbare oder mittelbare Verbindung, beispielsweise über ein Kabel oder ein sonstiges Verbindungsstück, zum Einsatz kommt. Einbezogen sind außerdem Anschluss- und Befestigungseinheiten, die einteilig mit der zugeordneten Komponente der Blitzschutzeinrichtung ausgebildet sind. Beispielsweise kann an einem Blitzschutzleiter ein Befestigungsabschnitt mit einem Gewinde oder einer Bohrung ausgebildet sein, der die Anschluss- und Befestigungseinheit bildet.

Bei der Erfindung weist eine der beiden Anschluss- und Befestigungseinheiten eine Durchgangsöffnung auf, durch die der Verbindungsleiter von außen eingeführt wird. Die Potentialausgleichsverbindung kann daher zu einem Zeitpunkt hergestellt werden, zu dem wesentliche Fertigungsschritte des Windenergieanlagenrotorblatts bereits abgeschlossen sind. Insbesondere ist abgesehen von der Durchgangsöffnung kein Zugang zum Inneren des Windenergieanlagenrotorblatts mehr erforderlich, so dass die beiden Rotorblatthalbschalen bereits zusammengefügt werden können, bevor der Verbindungsleiter montiert wird. Das ist besonders für die Bereiche des Rotorblatts vorteilhaft, die nach dem Zusammenfügen der Rotorblatthalbschalen von innen nicht mehr zugänglich sind, wie beispielsweise der Blattspitzenbereich. Die Lösung bietet weitere wichtige Vorteile. Einerseits werden kritische Fertigungsschritte wie insbesondere das Zusammenfügen zweier Halbschalen nicht durch den Verbindungsleiter erschwert. Weder muss die korrekte Anordnung des Verbindungsleiters während der kritischen Fertigungsschritte überwacht werden, noch besteht die Gefahr, den Verbindungsleiter dabei zu beschädigen. Andererseits ermöglicht die "nachträgliche" Montage des Verbindungsleiters eine umfassende Wartung und Kontrolle einschließlich eines Austauschs des Verbindungsleiters zu einem späteren Zeitpunkt.

In einer Ausgestaltung wird der Schritt b) nach dem Verbinden der beiden Rotorblatthalbschalen miteinander ausgeführt. Der Verbindungsleiter wird also "nachträglich" montiert bzw. in das Windenergieanlagenrotorblatt eingeführt. Es versteht sich, dass der Schritt c) insbesondere anschließend, also nach dem Schritt b), ausgeführt werden kann.

In einer Ausgestaltung ist eine der beiden Komponenten ein Blitzrezeptor, der nach dem Schritt c) an einer der Anschluss- und Befestigungseinheiten befestigt und/oder damit verbunden wird. Es ist demnach möglich, die mit dem erfindungsgemäßen Verfahren hergestellte Potentialausgleichsverbindung für einen nachträglich montierten Blitzrezeptor zu nutzen.

In einer Ausgestaltung werden im Schritt a) zwei Rotorblatthalbschalen miteinander verbunden, wobei mindestens eine der beiden Anschluss- und Befestigungseinheiten zuvor in eine Wandung einer der Rotorblatthalbschalen eingebettet und mit einer der beiden Komponenten der Blitzschutzeinrichtung verbunden wurde. Die Rotorblatthalbschalen können beispielsweise eine druckseitige und eine saugseitige Halbschale des Windenergieanlagenrotorblatts sein. Es kann jedoch auch eine andere, im Wesentlichen in Längsrichtung des Windenergieanlagenrotorblatts verlaufende Teilung vorgesehen sein, beispielsweise in eine profilnasenkantenseitige und eine profilendkantenseitige Halbschale. Auf diese Weise können auch beide Anschluss- und Befestigungseinheiten vor dem Verbinden der beiden Halbschalen in jeweils eine der Halbschalen eingebettet oder auf sonstige Weise integriert und mit einer zugeordneten Komponente der Blitzschutzeinrichtung verbunden werden. Nach dem Verbinden der Halbschalen braucht dann nur noch der Verbindungsleiter eingeführt und befestigt zu werden.

In einer Ausgestaltung wird beim Einbetten die mindestens eine Anschluss- und Befestigungseinheit zwischen zwei Deckschichten der Wandung angeordnet. Bei Aufbau der Wandung in Sandwichbauweise übernimmt die Anschluss- und Befestigungseinheit die Rolle eines Kernmaterials. Dadurch wird ein besonders stabiler Aufbau erreicht, wobei die Anschluss- und Befestigungseinheit die Struktur nicht nennenswert schwächt.

In einer Ausgestaltung ist eine der beiden Komponenten ein Blitzschutzleiter, der in die Rotorblatthalbschale integriert ist, in die die mindestens Anschluss- und Befestigungseinheit eingebettet ist. Die Verbindung zwischen Anschluss- und Befestigungseinheit und Blitzschutzleiter kann beispielsweise mit einem Kabel oder einem sonstigen Verbindungsstück hergestellt werden, insbesondere solange noch ungehinderter Zugang zur Innenseite der Rotorblatthalbschale möglich ist.

In einer Ausgestaltung wird die im Schritt b) verwendete Durchgangsöffnung von der Außenseite des Windenergieanlagenrotorblatts freigelegt, nachdem die Anschluss- und Befestigungseinheit, die die Durchgangsöffnung aufweist, von der Außenseite des Windenergieanlagenrotorblatts aus lokalisiert wurde. Beispielsweise kann eine Anschluss- und Befestigungseinheit nur von einer dünnen Laminatschicht oder einer Deckschicht einer in Sandwichbauweise erstellten Wandung verdeckt und durch diese Schicht hindurch von außen sichtbar sein. Es ist daher möglich, das Windenergieanlagenrotorblatt mit einer perfekten, aerodynamisch wirksamen Außenfläche herzustellen und mit einer Anschluss- und Befestigungseinheit zu versehen, deren Durchgangsöffnung erst nachträglich von außen freigelegt wird.

In einer Ausgestaltung wird zum Freilegen der Durchgangsöffnung ein luftdicht verschlossener Hohlraum der Anschluss- und Befestigungseinheit, die die Durchgangsöffnung aufweist, aufgebohrt. Eine seitliche Wandung des Hohlraums bildet dann die Durchgangsöffnung. Der besondere Vorteil besteht darin, dass die Anschluss- und Befestigungseinheit problemlos in eine Wandung des Windenergieanlagenrotorblatts integriert werden kann, ohne dass die Durchgangsöffnung beeinträchtigt wird, zum Beispiel durch während eines Vakuuminfusionsprozesses eindringendes Kunststoffmaterial. Dies gilt entsprechend für in dem Hohlraum angeordnete Elemente, beispielsweise Verbindungsmittel zur Verbindung mit dem Verbindungsleiter oder mit einer der Komponenten der Blitzschutzeinrichtung.

In einer Ausgestaltung weist die andere der beiden Anschluss- und Befestigungseinheiten ebenfalls eine Durchgangsöffnung auf und im Schritt b) wird eines der beiden Enden des Verbindungsleiters durch diese Durchgangsöffnung hindurch wieder auf die Außenseite des Windenergieanlagenrotorblatts geführt. Demnach kann der Verbindungsleiter bei der Montage im Bereich beider Anschluss- und Befestigungseinheiten von außen gehandhabt werden. Dadurch wird die korrekte Befestigung des Verbindungsleiters weiter vereinfacht.

In einer Ausgestaltung wird im Schritt b) zunächst ein Führungsrohr durch die beiden Durchgangsöffnungen hindurchgeführt, in dem der Verbindungsleiter angeordnet ist oder durch das der Verbindungsleiter vorgeschoben wird, wobei das Führungsrohr anschließend wieder entfernt wird. Auf diese Weise kann der Verbindungsleiter besonders einfach eingeführt werden und gegebenenfalls auch einen größeren Freiraum überbrücken.

In einer Ausgestaltung wird im Schritt b) zunächst ein Führungsdraht oder -seil durch die beiden Durchgangsöffnungen hindurchgeführt, mit dem der Verbindungsleiter durch die beiden Durchgangsöffnungen hindurchgeführt wird. Dies ist eine Alternative zur Verwendung eines Führungsrohrs, die ebenfalls ein besonders einfaches Einführen des Verbindungsleiters ermöglicht. Auch eine Kombination von Führungsrohr und Führungsdraht und/oder -seil ist möglich.

In einer Ausgestaltung werden eine Länge des Verbindungsleiter so gewählt und die beiden Enden des Verbindungsleiters im Schritt c) so befestigt, dass der an beiden Enden befestigte Verbindungsleiter den Freiraum im Wesentlichen geradlinig überspannt. Mit "im Wesentlichen geradlinig" ist gemeint, dass annähernd ein kürzestmögliche Verbindung hergestellt wird, wobei geringfügige Abweichungen von einem exakt geradlinigen Verlauf des Verbindungsleiters, die sich z.B. aus Fertigungstoleranzen oder aus von einer geraden Linie zwischen den beiden Anschluss- und Befestigungseinheiten abweichend angeordneten Endabschnitten des Verbindungsleiters ergeben, möglich sind. In jedem Fall wird eine aus elektrotechnischen Gesichtspunkten vorteilhafte, direkte Verbindung erzielt. Außerdem wird vermieden, dass sich der Verbindungsleiter im Betrieb des Rotorblatts mehr als nur geringfügig bewegen kann, was einem Versagen wegen Materialermüdung vorbeugt.

In einer Ausgestaltung werden die beiden Enden des Verbindungsleiters im Schritt c) von der Außenseite des Windenergieanlagenrotorblatts aus an jeweils einer der beiden Anschluss- und Befestigungseinheiten befestigt. Nach dem Einführen des Verbindungsleiters ist demnach kein weiterer Zugang zum Inneren des Windenergieanlagenrotorblatts erforderlich und die Befestigung ist besonders einfach.

In einer Ausgestaltung wird im Schritt c) mindestens eines der beiden Enden des Verbindungsleiters mit einer Lochscheibe verschraubt, deren Durchmesser größer ist als die Durchgangsöffnung und die an einer Außenseite der betreffenden Anschluss- und Befestigungseinheit anliegt. Dadurch wird eine einfach zu montierende Verbindung mit großen Kontaktflächen und entsprechend hoher Stromtragfähigkeit hergestellt. Die Lochscheibe kann von außen mit der Anschluss- und Befestigungseinheit verschraubt werden. Die Verschraubung von Lochscheibe und dem Ende des Verbindungsleiters kann zum Beispiel mit einem durch das Loch der Lochscheibe hindurchgeführten Gewindebolzen ausgeführt werden, der in ein Innengewinde in einer Stirnfläche eines das Ende bildenden Anschlussstücks des Verbindungsleiters eingeschraubt wird.

In einer Ausgestaltung werden eine oder mehrere Distanzscheiben zwischen der Lochscheibe und der betreffenden Anschluss- und Befestigungseinheit angeordnet. Dadurch kann der Verbindungsleiter geradlinig oder annähernd geradlinig zwischen den beiden Anschluss- und Befestigungseinheiten angeordnet und/oder gespannt werden.

Die oben angegebene Aufgabe wird ebenfalls gelöst durch das Windenergieanlagenrotorblatt mit den Merkmalen des Anspruchs 16.

Das Windenergieanlagenrotorblatt hat zwei Rotorblatthalbschalen, die jeweils eine Anschluss- und Befestigungseinheit aufweisen, die mit einer Komponente einer Blitzschutzeinrichtung verbunden ist, und einem im Inneren des Windenergieanlagenrotorblatts angeordneten Verbindungsleiter, der zwei Enden aufweist, die an jeweils einer der Anschluss- und Befestigungseinheiten befestigt sind, wobei der Verbindungsleiter einen zwischen den beiden Anschluss- und Befestigungseinheiten angeordneten Freiraum im Wesentlichen geradlinig überspannt..

Die beiden Anschluss- und Befestigungseinheiten können insbesondere einander gegenüberliegend angeordnet sein, wenn die beiden Rotorblatthalbschalen wie vorgesehen miteinander verbunden sind.

Zu den Merkmalen und Vorteilen des Windenergieanlagenrotorblatts wird auf die vorstehenden Erläuterungen des Verfahrens verwiesen, die entsprechend gelten. Es versteht sich, dass die im Zusammenhang mit dem Verfahren erläuterten Merkmale der einzelnen Elemente jeweils mit dem Windenergieanlagenrotorblatt kombiniert werden können. Dies betrifft insbesondere die erläuterten gegenständlichen Merkmale der Anschluss- und Befestigungseinheit und des Verbindungsleiters, ebenso den Aufbau des Windenergieanlagenrotorblatts zum Beispiel aus Halbschalen oder mit einer Wandung in Sandwichbauweise, usw.

Nachfolgend werden weitere mögliche Besonderheiten der Elemente des Windenergieanlagenrotorblatts erläutert, die ebenfalls in Verbindung mit dem Verfahren eingesetzt werden können.

Die Anschluss- und Befestigungseinheit kann einen luftdicht verschlossenen Hohlraum aufweisen, in dem Verbindungsmittel zur Verbindung mit mindestens einer der Komponenten des Blitzschutzsystems angeordnet sind. Die Verbindungsmittel können Teil der Anschluss- und Befestigungseinheit und bereits vor dem Integrieren der Anschluss- und Befestigungseinheit in das Windenergieanlagenrotorblatt vorhanden sein. Sie können daher nach der Integration der Anschluss- und Befestigungseinheit in das Rotorblatt unmittelbar zum Anschließen bzw. Befestigen der Komponenten des Blitzschutzsystems verwendet werden.

Die Anschluss- und Befestigungseinheit kann dazu ausgebildet sein, in ein Windenergieanlagenrotorblatt integriert zu werden, d.h. insbesondere in eine Wandung des Windenergieanlagenrotorblatts eingebettet zu werden. Insbesondere kann sie gemeinsam mit in der Wandung enthaltenen Verstärkungsfasern in eine Kunststoffmatrix eingebettet werden, beispielsweise in einem Vakuuminfusionsverfahren oder einem sonstigen Verfahren, bei dem die Verstärkungsfasern und die Anschluss- und Befestigungseinheit in ein zunächst flüssiges, später aushärtendes Kunststoffmaterial eingebettet werden.

Die Komponenten des Blitzschutzsystems sind elektrisch leitfähig und tragen bei bestimmungsgemäßer Verwendung zur Ableitung eines Blitzstroms bei. Sie können beispielsweise einen Blitzschutzleiter, einen Blitzrezeptor, eine Potentialausgleichsverbindung und/oder einen sonstigen Verbindungsleiter umfassen. Insbesondere kann vorgesehen sein, eine Anschluss- und Befestigungseinheit mit mindestens zwei dieser Komponenten zu verbinden, um eine elektrische Verbindung zwischen diesen Komponenten herzustellen. Dabei kann mindestens eine der Komponenten über in dem Hohlraum angeordneten Verbindungsmittel angeschlossen und/oder befestigt werden.

Die Anschluss- und Befestigungseinheit kann mit geeigneten Abmessungen und einer ausreichenden Formstabilität versehen werden, um besonders einfach in das Windenergieanlagenrotorblatt integriert werden zu können. Insbesondere kann sie bei der Herstellung einer Wandung des Windenergieanlagenrotorblatts in Sandwichbauweise Teile eines Kernmaterials ersetzen oder bilden, also zwischen zwei Deckschichten der Wandung angeordnet werden. Auch wenn vor und während des Aushärtens eines flüssigen Kunststoffmaterials erhebliche Kräfte auf die Anschluss- und Befestigungseinheit einwirken, beispielsweise bei Herstellung eines Vakuums, behält die Anschluss- und Befestigungseinheit ihre Form, sodass die Herstellung der Wandung nicht beeinträchtigt wird.

Die Anschluss- und Befestigungseinheit kann so ausgebildet sein, dass der Hohlraum nach dem Integrieren der Anschluss- und Befestigungseinheit in das Windenergieanlagenrotorblatt von einer Außenseite und/oder Innenseite des Windenergieanlagenrotorblatts aus geöffnet werden kann. Nach dem Öffnen des Hohlraums sind die Verbindungsmittel von außen und/oder innen zugänglich, sodass die Komponenten des Blitzschutzsystems einfach befestigt und angeschlossen werden können. Um die Öffnungsmöglichkeit zu schaffen, kann die Anschluss- und Befestigungseinheit beispielsweise ein entfernbares Element wie einen Stopfen aufweisen. Ebenfalls möglich ist, dass die Anschluss- und Befestigungseinheit eine zum Öffnen des Hohlraums vorgesehene Wandung aufweist und das Öffnen durch Entfernen dieser Wandung ausgeführt wird, beispielsweise durch Herstellen einer Bohrung durch die Wandung hindurch, oder durch Herausbrechen eines hierfür vorgesehenen Abschnitts der Wandung.

Die Anschluss- und Befestigungseinheit kann einen Grundkörper aus einem elektrisch isolierenden Material und einen Anschlusskörper aus einem elektrisch leitfähigen Material aufweisen, wobei Grundkörper und Anschlusskörper fest miteinander verbunden sind und der Hohlraum zwischen Grundkörper und Anschlusskörper angeordnet ist. Die Verbindungsmittel sind an dem Anschlusskörper ausgebildet. Die Kombination von Grundkörper und Anschlusskörper ermöglicht eine besonders einfache Herstellung der Anschluss- und Befestigungseinheit mit dem Hohlraum. Die Ausführung des Grundkörpers aus einem nicht elektrisch leitfähigen Material ermöglicht eine elektrisch isolierte Montage des Anschlusskörpers. Außerdem kann der Grundkörper bei geeigneter Materialwahl eine besonders innige Verbindung mit der Wandung eines Windenergieanlagenrotorblatts eingehen. Hierzu kann insbesondere eine äußere Umfangsfläche der Anschluss- und Befestigungseinheit von dem Grundkörper gebildet sein.

In einer Einbauposition der Anschluss- und Befestigungseinheit in einem Windenergieanlagenrotorblatt ist der Grundkörper einer Außenseite des Windenergieanlagenrotorblatts und der Anschlusskörper einem Innenraum des Windenergieanlagenrotorblatts zugewandt. Nach der Integration der Anschluss- und Befestigungseinheit in das Windenergieanlagenrotorblatt ist der Anschlusskörper dadurch besonders einfach von der Innenseite des Rotorblatts aus zugänglich, insbesondere zum Herstellen einer Verbindung zu einem Blitzschutzleiter. Gleichzeitig kann der Anschlusskörper von einer Außenseite des Windenergieanlagenrotorblatts durch den Grundkörper elektrisch isoliert sein, sodass unmittelbaren Blitzeinschlägen in den Anschlusskörper entgegengewirkt wird.

Das elektrisch isolierende Material kann ein Faserverbundwerkstoff sein. Dadurch kann die Anschluss- und Befestigungseinheit optimal in eine Wandung eines Windenergieanlagenrotorblatts eingebettet werden. Gleichzeitig erhält der Grundkörper eine hohe Formstabilität und kann mit den gleichen Verfahren bearbeitet werden wie weitere, ggf. aus demselben oder einem ähnlichen Material hergestellte Komponenten des Windenergieanlagenrotorblatts.

Die Verbindungsmittel können ein erstes Verbindungsmittel aufweisen, welches ein Innengewinde in dem Anschlusskörper aufweist, wobei das Innengewinde von einer Wandung des Grundkörpers verdeckt ist, die im Bereich des Innengewindes einen Abstand von dem Anschlusskörper aufweist. Von außen betrachtet, befindet sich das Innengewinde hinter der Wandung. Das erste Verbindungsmittel ist für die Montage eines Blitzrezeptors vorgesehen. Dieser kann nach dem Entfernen bzw. Öffnen der Wandung unmittelbar in das Innengewinde eingeschraubt werden, wodurch zugleich eine elektrische und mechanische Verbindung zwischen Blitzrezeptor und Anschlusskörper hergestellt wird. Die Wandung des Grundkörpers kann beim Öffnen des Hohlraums ganz oder teilweise entfernt werden. Da sie einen Abstand vom Anschlusskörper im Bereich des Innengewindes einhält, kann die Wandung besonders einfach entfernt werden, ohne das Innengewinde zu beschädigen. Außerdem wird durch den Abstand vermieden, dass beim Zusammenfügen von Grundkörper und Anschlusskörper (beim Herstellen der Anschluss- und Befestigungseinheit) Abschnitte der Wandung mit dem Anschlusskörper verklebt werden, die später entfernt werden sollen. Der Abstand von dem Innengewinde bzw. dem Anschlusskörper kann sowohl in axialer als auch in radialer Richtung (insbesondere radial nach außen), jeweils bezogen auf das Innengewinde, eingehalten werden.

Der Anschlusskörper kann die Durchgangsöffnung aufweisen, die luftdicht von einem entfernbaren Blindstopfen verschlossen ist. Der Blindstopfen kann zugleich den Hohlraum in der Anschluss- und Befestigungseinheit verschließen. Nach der Integration der Anschluss- und Befestigungseinheit in ein Windenergieanlagenrotorblatt kann der Blindstopfen entfernt werden, um die Durchgangsöffnung freizugeben. Dadurch wird einerseits eine weitere Zugangsmöglichkeit zu dem Hohlraum, insbesondere von einer Innenseite des Windenergieanlagenrotorblatts aus, geschaffen. Andererseits besteht die Möglichkeit, die Anschluss- und Befestigungseinheit sowohl von der Außenseite als auch von der Innenseite des Windenergieanlagenrotorblatts aus zu öffnen, sodass eine Durchgangsöffnung durch die gesamte Anschluss- und Befestigungseinheit und durch eine Wandung des Rotorblatts, in die die Anschluss- und Befestigungseinheit integriert ist, zur Verfügung gestellt wird. Dadurch bietet die Anschluss- und Befestigungseinheit insbesondere von einer Außenseite des Rotorblatts aus einen Zugang zu dessen Innenraum, der für unterschiedliche Wartungs- und Montagearbeiten genutzt werden kann.

Die Anschluss- und Befestigungseinheit kann mit einem Blitzrezeptor kombiniert werden, der mit den ersten Verbindungsmitteln verbindbar ist und einen Außendurchmesser aufweist, der größer ist als ein Außendurchmesser des Anschlusskörpers. Diese Abstimmung der Abmessungen des Blitzrezeptors auf den Anschlusskörper führen zu einer effektiven Abschirmung des Anschlusskörpers, wodurch ein Blitzschlag an dem Blitzrezeptor vorbei unmittelbar in den Anschlusskörper hinein vermieden wird. Der Blitzrezeptor ist die mindestens eine Komponente des Blitzschutzsystems, die mit den Verbindungsmitteln in dem Hohlraum verbunden wird.

Die Anschluss- und Befestigungseinheit kann einen Anschlag aufweisen, an dem der Blitzrezeptor anliegt, wenn er über die ersten Verbindungsmittel mit dem Anschlusskörper verbunden ist. Im Bereich des Anschlags kann insbesondere ein großflächiger Kontakt hergestellt werden, insbesondere mit einer Kontaktfläche von 20 mm² oder mehr. Dies stellt zum einen eine hohe Stromtragfähigkeit der Verbindung zwischen Blitzrezeptor und Anschluss- und Befestigungseinheit sicher. Zum anderen sorgt der Anschlag dafür, dass sich der Blitzrezeptor bei ordnungsgemäßer Verbindung über die ersten Verbindungsmittel mit dem Anschlusskörper in einem definierten Abstand von dem Anschlusskörper bzw. der Anschluss- und Befestigungseinheit befindet. Der Anschlag kann so angeordnet sein, dass der Blitzrezeptor etwa bündig mit einer Außenseite des Windenergieanlagenrotorblatts abschließt, wenn die Anschluss- und Befestigungseinheit in der vorgesehenen Einbauposition angeordnet ist und der Blitzrezeptor ordnungsgemäß mit den ersten Verbindungsmitteln verbunden ist.

Die Verbindungsmittel können ein zweites Verbindungsmittel umfassen, welches in einer in den Hohlraum weisenden Fläche des Anschlusskörpers angeordnet ist und eine Bohrung mit einem Innengewinde aufweist. Das zweite Verbindungsmittel dient zum Anschluss einer elektrischen Leitung. Die elektrische Leitung kann beispielsweise ein Blitzableiter sein oder ein Verbindungsleiter, der eine Verbindung zwischen der Anschluss- und Befestigungseinheit und einem Blitzschutzleiter (Hauptableiter) herstellt. Alternativ kann die elektrische Leitung eine Potentialausgleichsverbindung zwischen zwei Anschluss- und Befestigungseinheiten sein. Jeweils eine der beiden Anschluss- und Befestigungseinheiten kann dabei in eine der beiden Halbschalen des Windenergieanlagenrotorblatts integriert sein.

Es kann ein drittes Verbindungsmittel vorgesehen sein, welches an einer in den Innenraum des Windenergieanlagenrotorblatts weisenden Fläche des Anschlusskörpers angeordnet ist und eine Bohrung mit einem Innengewinde umfasst. Das dritte Verbindungsmittel dient zum Anschluss einer weiteren elektrischen Leitung. Es kann außerhalb des luftdicht verschlossenen Hohlraums angeordnet sein. Die weitere elektrische Leitung kann zum Beispiel eine Potentialausgleichsverbindung zwischen der Anschluss- und Befestigungseinheit und einem in der Schale des Windenergieanlagenrotorblatts eingebetteten Blitzableiter ausgebildet.

Nachfolgend wird die Erfindung anhand eines in Figuren dargestellten Ausführungsbeispiels näher erläutert. Es zeigen:
- Fign. 1-3: das Integrieren einer Anschluss- und Befestigungseinheit in eine Halbschale eines Windenergieanlagenrotorblatts, jeweils dargestellt in einem schematischen Querschnitt zu unterschiedlichen Zeitpunkten,
- Fig. 4: einen vergrößerten Ausschnitt der Anordnung aus Fig. 3 nach dem Ausführen weiterer Herstellungsschritte,
- Fig. 5: die Anordnung aus Fig. 4 nach dem Zusammenfügen mit einer weiteren Halbschale, ebenfalls in einer schematischen Querschnittsdarstellung,
- Fig. 6: die Anordnung aus Fig. 5 nach dem Öffnen der Hohlräume der beiden enthaltenen Anschluss- und Befestigungseinheiten, ebenfalls in einer schematischen Querschnittsdarstellung,
- Fig. 7: die Anschluss- und Befestigungseinheiten aus Fig. 6 nebst weiteren Elementen einer Blitzschutzeinrichtung nach dem Herstellen einer Potentialausgleichsverbindung, ebenfalls in einer schematischen Querschnittsdarstellung, wobei die übrigen Elemente der Halbschalen nicht dargestellt sind,
- Fig. 8: die Anordnung aus Figur 7 nach der Montage zweiter Blitzschutzrezeptoren, ebenfalls in einer schematischen Querschnittsdarstellung.
- Fig. 9: ein weiteres Ausführungsbeispiel einer Anschluss- und Befestigungseinheit in einer Schnittdarstellung,
- Fig. 10: die Anordnung aus Figur 9 in einer perspektivischen Ansicht,
- Fig. 11: das Einführen eines Verbindungsleiters mit Hilfe eines Führungsrohrs in einer schematischen Querschnittsdarstellung, und
- Fig. 12: das Einführen eines Verbindungsleiters mit Hilfe einer Kombination aus Führungsdraht und -seil in einer schematischen Querschnittsdarstellung.

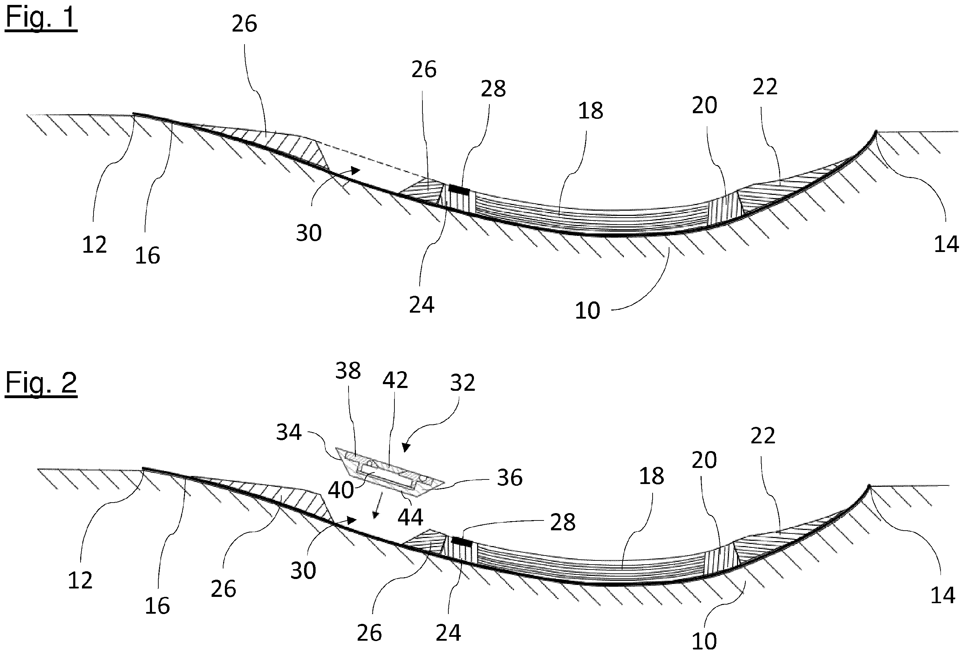

Zunächst wird anhand der Figuren 1 bis 6 erläutert, wie bei dem erfindungsgemäßen Verfahren der Schritt des Bereitstellens eines Windenergieanlagenrotorblatts, das zwei Anschluss- und Befestigungseinheiten 32, die jeweils mit einer der beiden Komponenten der Blitzschutzeinrichtung verbunden oder verbindbar sind, und einen im Inneren des Windenergieanlagenrotorblatts zwischen den beiden Anschluss- und Befestigungseinheiten 32 angeordneten Freiraum aufweist, ausgeführt werden kann.

Figur 1 veranschaulicht das Einlegen unterschiedlicher Materialien bei der Herstellung einer Halbschale für ein Windenergieanlagenrotorblatt in eine Herstellungsform 10. Die Herstellungsform 10 ist im Querschnitt dargestellt und weist zwischen einer in der Fig. 1 links dargestellten Profilendkante 12 und einer in der Figur 1 rechts dargestellten Profilnasenkante 14 eines herzustellenden Windenergieanlagenrotorblatts einen gekrümmten Verlauf auf, der einem aerodynamischen Profil des Windenergieanlagenrotorblatts entspricht.

Als unterste, in der Fig. 1 dargestellte Lage befindet sich in der Herstellungsform 10 eine erste Deckschicht 16 aus Verstärkungsfasern, beispielsweise eine oder mehrere Schichten eines Gewebes, insbesondere aus Glasfasern.

Etwa in der Mitte zwischen Profilendkante 12 und Profilnasenkante 14 sind mehrere Lagen unidirektional ausgerichteter Verstärkungsfasern, insbesondere Kohlenstofffasern, angeordnet, die in Längsrichtung des Rotorblatts verlaufen und einen Hauptgurt 18 bilden. Zur Profilnasenkante 14 hin schließen sich an die Verstärkungsfasern des Hauptgurts 18 ein erster nasenkantenseitiger Einleger 20 und ein zweiter nasenkantenseitiger Einleger 22 an. Beide bestehen aus einem Kernmaterial, beispielsweise aus einem geschäumten Kunststoff.

Zur Profilendkante 12 hin schließen sich an die Verstärkungsfasern des Hauptgurts 18 ein erster endkantenseitiger Einleger 24 und ein zweiter endkantenseitiger Einleger 26 an. In einer im Querschnitt rechteckigen Aussparung des ersten endkantenseitigen Einlegers 24 ist ein Blitzschutzleiter 28 angeordnet, dessen Oberseite etwa bündig mit einer Oberseite des ersten endkantenseitigen Einlegers 24 abschließt.

Der zweite endkantenseitige Einleger 26 weist eine Aussparung 30 auf, die sich über die gesamte Dicke des zweiten endkantenseitigen Einlegers 26 erstreckt. Die Aussparung 30 grenzt an die erste Deckschicht 16 an und weist im gezeigten Beispiel eine rotationssymmetrische, konische Form auf. In einer nicht dargestellten Ansicht von oben in die Herstellungsform 10 hinein erscheint die Aussparung 30 kreisförmig.

Fig. 2 zeigt, wie in die Aussparung 30 des zweiten endkantenseitigen Einlegers 26 eine Anschluss- und Befestigungseinheit 32 eingesetzt wird. Die Anschluss- und Befestigungseinheit 32 ist insgesamt scheibenförmig mit einer umlaufenden, konischen Umfangsfläche 34. Die Anschluss- und Befestigungseinheit 32 ist komplementär zu der Aussparung 30 im zweiten endkantenseitigen Einleger 26 geformt.

Die Anschluss- und Befestigungseinheit 32 weist einen Grundkörper 36 aus einem elektrisch isolierenden Material, beispielsweise aus einem faserverstärkten Kunststoffmaterial, und einen Anschlusskörper 38 auf. Der Grundkörper 36 bildet die konische Umfangsfläche 34 und weist außerdem eine kreisförmige, im Wesentlichen ebene Fläche 44 auf, die einer Außenseite des herzustellenden Windenergieanlagenrotorblatts zugewandt ist und nach dem Einsetzen der Anschluss- und Befestigungseinheit 32 in die Aussparung 30 an die erste Deckschicht 16 grenzt.

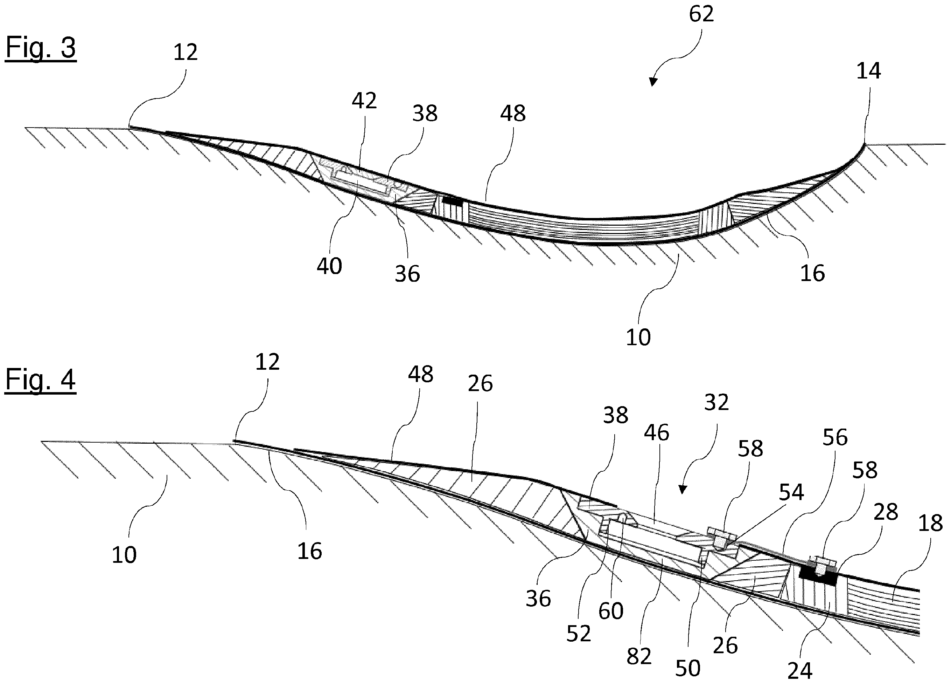

Der Anschlusskörper 38 besteht aus einem elektrisch leitfähigen Material, beispielsweise aus Kupfer, Aluminium oder Edelstahl, und ist im Wesentlichen rotationssymmetrisch ausgebildet. In seiner Mitte weist der Anschlusskörper 38 eine Durchgangsöffnung 46 (siehe Fig. 4) auf, die von einem Blindstopfen 42 verschlossen ist. Dadurch ist der zwischen dem Grundkörper 36 und dem Anschlusskörper 38 ausgebildete Hohlraum 40 luftdicht verschlossen.

Nach dem Einsetzen der Anschluss- und Befestigungseinheit 32 in die Aussparung 30 wird die gesamte in der Herstellungsform 10 befindliche Anordnung mit einer zweiten Deckschicht 48 aus Verstärkungsfasern abgedeckt (siehe Fig. 3). Die Verstärkungsfasern der zweiten Deckschicht 48 können insbesondere in Form einer Schicht oder mehrerer Schichten eines Gewebes, beispielsweise aus Glasfasern, in die Herstellungsform 10 eingelegt werden. Die Anschluss- und Befestigungseinheit 32 ist zwischen der ersten Deckschicht 16 und der zweiten Deckschicht 48 eingebettet und übernimmt dort die Funktion eines Kernmaterials.

Anschließend wird ein flüssiges Kunststoffmaterial in die Herstellungsform 10 eingebracht, insbesondere in einem Vakuuminfusionsverfahren. Alle in der Herstellungsform 10 befindlichen Elemente (wie in Fig. 3 gezeigt) werden dadurch in eine Kunststoffmatrix eingebettet. Freiräume zwischen den in der Herstellungsform 10 befindlichen Elementen, insbesondere zwischen den unterschiedlichen Schichten aus Verstärkungsfasern, den verschiedenen Einlegern 20 bis 26 und der Anschluss- und Befestigungseinheit 32 werden mit dem Kunststoffmaterial ausgefüllt und dadurch dauerhaft miteinander verklebt. Wegen des luftdichten Abschlusses des Hohlraums 40 gelangt jedoch kein Kunststoffmaterial in die Anschluss- und Befestigungseinheit 32. Nach dem Einbringen des Kunststoffmaterials härtet dieses in der Herstellungsform 10 aus, wodurch die Halbschale 62 im Wesentlichen fertiggestellt ist.

Fig. 4 zeigt einen Ausschnitt aus der Fig. 3, in dem die Anschluss- und Befestigungseinheit 32 angeordnet ist. Nach dem Aushärten des Kunststoffmaterials wurde die zweite Deckschicht 48 im Bereich der Anschluss- und Befestigungseinheit 32 teilweise entfernt, insbesondere oberhalb einer in dem Anschlusskörper 38 ausgebildeten Durchgangsöffnung 46. Der Blindstopfen 42, mit dem der Hohlraum 40 innerhalb der Anschluss- und Befestigungseinheit 32 und die Durchgangsöffnung 46 während des Einbringens und Aushärtens des flüssigen Kunststoffmaterials luftdicht verschlossen war, wurde nach dem Entfernen der zweiten Deckschicht 48 ebenfalls entfernt.

Fig. 4 lässt erkennen, dass der Anschlusskörper 38 eine scheibenförmige Grundplatte aufweist, in deren Mitte die Durchgangsöffnung 46 ausgebildet ist. Eine Oberseite der Grundplatte ist der zweiten Deckschicht 48 zugewandt, ebenso einem Innenraum des herzustellenden Windenergieanlagenrotorblatts. Die scheibenförmige Grundplatte geht an ihrer Unterseite in einen rohrförmigen Abschnitt 50 über, an dessen Innenseite ein Innengewinde 52 ausgebildet ist.

Das Innengewinde 52 bildet die ersten Verbindungsmittel der Anschluss- und Befestigungseinheit 32. Das Innengewinde 52 weist einen Abstand zu einer Wandung 82 des Grundkörpers 36 auf, die das Innengewinde 52 verdeckt. Dieser Abstand erstreckt sich bezogen auf das Innengewinde 52 in axialer Richtung, in Richtung zur ersten Deckschicht 16 hin. Zwischen dem freien Ende des Innengewindes 52 und dem Grundkörper 36 gibt es außerdem einen Abstand in radialer Richtung nach außen.

Die Anschluss- und Befestigungseinheit 32 weist außerdem zweite Verbindungsmittel in Form einer Gewindebohrung 54 an der Oberseite der scheibenförmigen Grundplatte des Anschlusskörpers 38 auf. Diese zweiten Verbindungsmittel dienen zur elektrischen Verbindung mit dem Blitzschutzleiter 28. Hierzu zeigt Fig. 4, dass ein streifenförmiges Verbindungsstück 56 mit jeweils einem Gewindebolzen 58 einerseits mit dem Anschlusskörper 38, andererseits mit dem Blitzschutzleiter 28 verschraubt ist.

Außerdem weist die Anschluss- und Befestigungseinheit 32 dritte Verbindungsmittel in Form einer weiteren Gewindebohrung 60 auf, die innerhalb des rohrförmigen Abschnitts 50 in einer der ersten Deckschicht 16 zugewandten Außenseite der scheibenförmigen Grundplatte des Anschlusskörpers 38 angeordnet ist, benachbart zu der Durchgangsöffnung 46. Alle bislang erläuterten Fertigungsschritte, bis zu dem in der Figur 4 gezeigten Zustand, können innerhalb der Herstellungsform 10 ausgeführt werden.

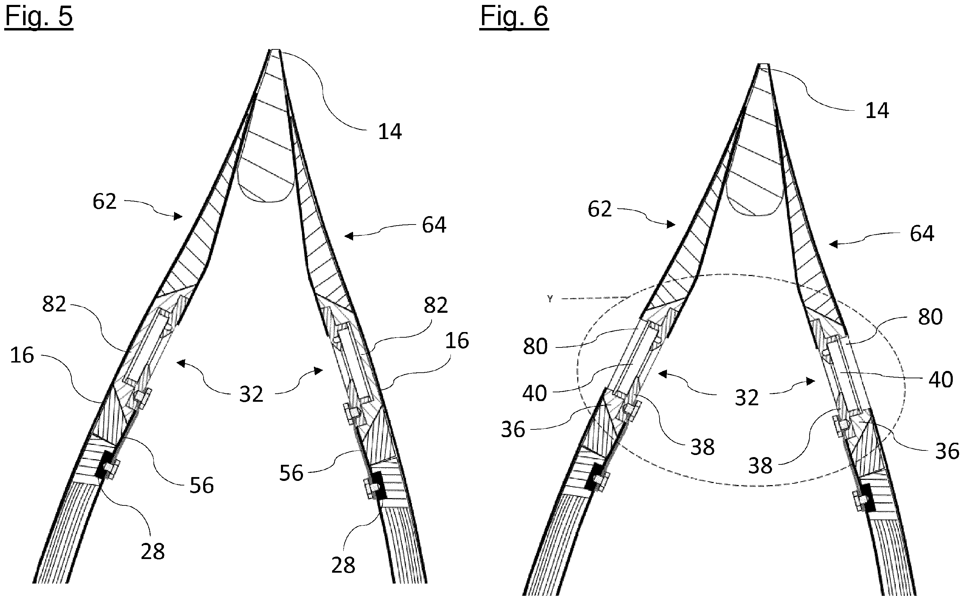

Anschließend wird die in der Herstellungsform 10 gefertigte Halbschale mit einer weiteren Halbschale 64 zusammengefügt, wie ausschnittsweise im Querschnitt in der Fig. 5 dargestellt. Das Zusammenfügen erfolgt durch Verkleben der beiden Halbschalen 62, 64 unter anderem wie in der Figur 5 gezeigt im Bereich der Profilendkanten 14. Die weitere Halbschale 64 entspricht hinsichtlich ihres Aufbaus der Halbschale 62, deren Herstellung anhand der Figuren 1 bis 4 erläutert wurde, und weist ebenfalls eine Anschluss- und Befestigungseinheit 32 und einen damit verbundenen Blitzschutzleiter 28 auf. Man erkennt, dass die beiden Anschluss- und Befestigungseinheiten 32 einander gegenüberliegend angeordnet sind.

Fig. 6 zeigt die Anordnung aus Fig. 5 nach dem Öffnen der beiden Hohlräume 40 der Anschluss- und Befestigungseinheiten 32, jeweils von einer Außenseite des aus den zusammengefügten Halbschalen 62, 64 bestehenden Windenergieanlagenrotorblatts. Hierzu wurde jeweils von der Außenseite aus eine Bohrung 80 durch die erste Deckschicht 16 und eine Wandung 82, die die kreisförmige Fläche 44 des jeweils angrenzenden Grundkörpers 36 bildet, hindurch ausgeführt, mit einem Durchmesser, der einem mittleren Durchmesser des rohrförmigen Abschnitts 50 der Anschlusskörper 38 entspricht.

Um diese Bohrung 80 an der gewünschten Stelle auszuführen, können die Anschluss- und Befestigungseinheiten 32 von der Außenseite des Rotorblatts aus einfach lokalisiert werden, weil die Anschlusskörper 38 bzw. die Stirnseiten deren rohrförmiger Abschnitte 50 und/oder die innerhalb davon angeordneten Hohlräume 40 und/oder die Durchgangsöffnungen 46 von der Außenseite aus sichtbar sind.

Fig. 6 zeigt die Anordnung aus Fig. 4 nach dem Herstellen der beiden Bohrungen 80. Die ersten Verbindungsmittel in Form der Innengewinde 52 liegen nun frei und sind von der Außenseite des Rotorblatts aus zugänglich. Außerdem ist nun auch eine Zugangsmöglichkeit von der Außenseite des Rotorblatts durch die Durchgangsöffnungen 46 hindurch in den Innenraum des Rotorblatts gegeben.

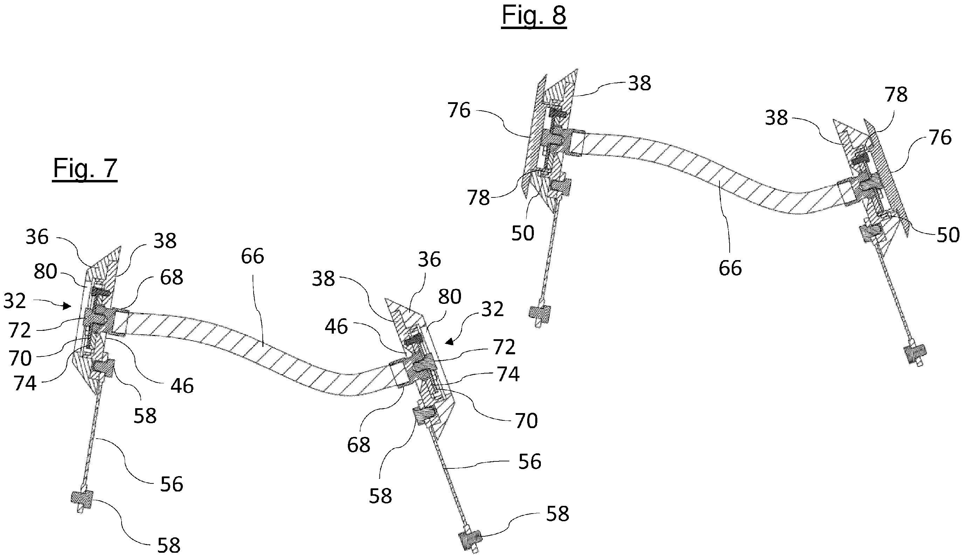

Fig. 7 zeigt die beiden Anschluss- und Befestigungseinheiten 32, die jeweils über ein Verbindungsstück 56 mit einem in der betreffenden Halbschale 62, 64 angeordneten Blitzschutzleiter 28, der in der Fig. 7 nicht gezeigt ist, verbunden sind. Außerdem zeigt Fig. 7 einen in die Anordnung der Fig. 6, also nach dem Zusammenfügen der beiden Halbschalen 62, 64, in das Windenergieanlagenrotorblatt eingesetzten Verbindungsleiter 66, der einen Potentialausgleich zwischen den beiden Anschluss- und Befestigungseinheiten 32 und den damit verbundenen Blitzschutzleitern 28 herstellt. Die Enden des Verbindungsleiters 66 werden jeweils an einer der Anschluss- und Befestigungseinheiten 32 befestigt, wie nachfolgend anhand der Figuren 7 und 8 beispielhaft dargestellt.

Der Verbindungsleiter 66 ist so bemessen, dass er sich zwischen den beiden Anschluss- und Befestigungseinheiten 32 durch den Innenraum des Rotorblatts hindurch in direkter Linie erstreckt, sodass sie keiner gesonderten Befestigung bedarf. Der Verbindungsleiter 66 weist an seinen beiden Enden Anschlussstücke 68 auf, die jeweils ein Innengewinde aufweisen. Die Anschlussstücke 68 sind innerhalb der Durchgangsöffnungen 46 der Anschlusskörper 38 angeordnet. An den Stirnseiten der Anschlussstücke 68 ist jeweils eine Lochscheibe 70 aus Metall angeordnet, die eine Öffnung aufweist, durch die ein Gewindebolzen 72 hindurchgeführt und in ein Innengewinde eines Anschlussstücks 68 eingeschraubt ist. Die Lochscheiben 70 ihrerseits liegen, ggf. unter Hinzufügung einer oder mehrerer Distanzscheiben 74, an einer Innenseite einer scheibenförmigen Grundplatte eines Anschlusskörpers 38 an und sind mit diesem über die ein drittes Verbindungsmittel bildende, weitere Gewindebohrung 60 (siehe Fig. 4) verschraubt. Die Lochscheiben 70 nebst Distanzscheiben 74 sind jeweils innerhalb eines Hohlraums 40 einer Anschluss- und Befestigungseinheit 32 angeordnet.

Fig. 8 zeigt die Anordnung aus Fig. 7, nachdem in jede der Anschluss- und Befestigungseinheiten 32 ein Blitzrezeptor 76 eingeschraubt wurde. Jeder Blitzrezeptor 76 weist eine kreisscheibenförmige Platte mit konischem Rand und einen konzentrisch an dessen Innenseite angeordneten, rohrförmigen Abschnitt 78 auf, der ein Außengewinde aufweist, das in ein Innengewinde 52 eines rohrförmigen Abschnitts 50 eines Anschlusskörpers 38 eingeschraubt ist. Dabei liegt die Stirnseite des rohrförmigen Abschnitts 78 jedes Blitzrezeptors 76 an der scheibenförmigen Grundplatte eines Anschlusskörpers 38 an, die einen Anschlag bildet und die relative Lage des Blitzrezeptors 76 zu der Anschluss- und Befestigungseinheit 32 vorgibt. Der Anschlag ist so angeordnet, dass die kreisscheibenförmigen Platten der Blitzrezeptoren 76 im Wesentlichen an einer der ersten Deckschichten 16 der betreffenden Halbschale 62, 64 anliegen bzw. eine dort entstehende, kleine Fuge einfach abgedichtet werden kann.

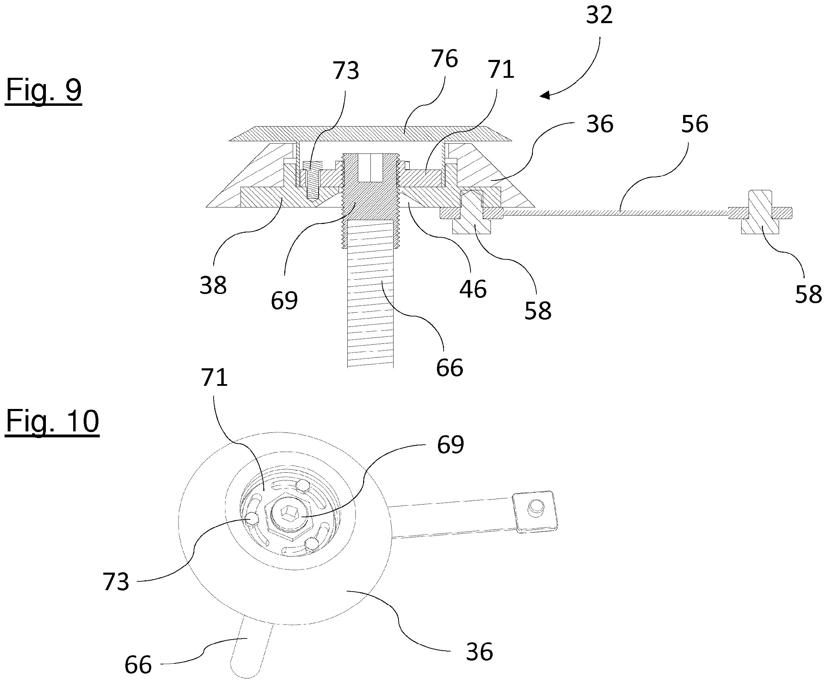

Fig. 9 zeigt eine der Anschluss- und Befestigungseinheiten 32 mit eingesetztem Blitzrezeptor 76 aus den Figuren 7 und 8 mit einer weiteren Ausgestaltung der Lösung zur Befestigung des Verbindungsleiters 66 an der Anschluss- und Befestigungseinheit 32. Die Montage des Verbindungsleiters 66 erfolgt vor dem Einschrauben des Blitzrezeptors 76.

Der Verbindungsleiter 66 weist an seinen beiden Enden Anschlussstücke 69 auf, die jeweils ein Außengewinde aufweisen. Jeweils eines der Anschlussstücke 69 ist innerhalb der Durchgangsöffnung 46 des Anschlusskörpers 38 angeordnet. An der Stirnseite des Anschlussstücks 69 ist eine Gewindescheibe 71 aus Metall angeordnet, die eine zentrale Öffnung mit einem Innengewinde aufweist. Die Gewindescheibe 71 wird auf das Außengewinde des Anschlussstücks 69 aufgeschraubt. Um entsprechende Werkzeuge ansetzen zu können, weist die Gewindescheibe 71 einen Absatz, der als Außen-Sechskant ausgebildet ist, und das Anschlussstück 69 an seiner Stirnseite eine Öffnung in Form eines Innen-Sechskants auf. Nach dem Einsetzen liegt die Gewindescheibe 71 ihrerseits an einer Innenseite einer scheibenförmigen Grundplatte eines Anschlusskörpers 38 an und ist mit dieser über Gewindebolzen 73 verschraubt. Ein Hinzufügen von Distanzscheiben ist in dieser Ausführung nicht erforderlich, da die Gewindescheibe 71 so weit auf das Anschlussstück 68 aufgeschraubt werden kann, bis der Verbindungsleiter 66 ausreichend gespannt ist.

Die Gewindescheibe 71 weist drei Langlöcher auf in die die Gewindebolzen 73 eingesetzt werden. Dies ist am besten in der Fig. 10 zu sehen.

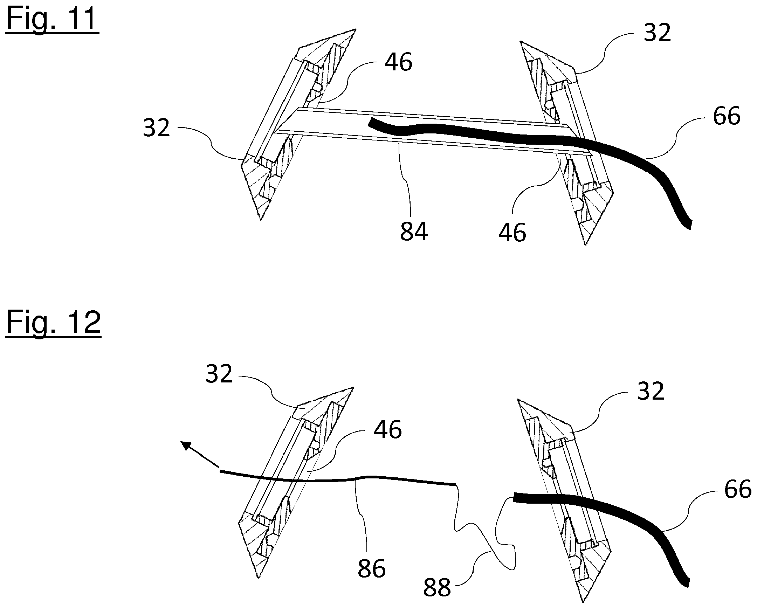

Die Figur 11 zeigt eine erste Alternative für die Ausführung des Verfahrensschritts, in dem der Verbindungsleiter 66 von einer Außenseite des Windenergieanlagenrotorblatts aus durch eine Durchgangsöffnung 46 einer der beiden Anschluss- und Befestigungseinheiten 32 hindurch in das Innere des Windenergieanlagenrotorblatts eingeführt wird. Hierzu wird zunächst ein Führungsrohr 84 durch die Durchgangsöffnungen 46 beider Anschluss- und Befestigungseinheiten 32 hindurch eingesetzt. Anschließend wird der Verbindungsleiter 66 durch das Führungsrohr 84 vorgeschoben. Danach ist vorgesehen, das Führungsrohr 84 wieder zu entfernen.

Figur 12 zeigt eine Alternative für das Einführen des Verbindungsleiters 66, bei der eine Kombination aus einem Führungsdraht 86 und einem Führungsseil 88 eingesetzt wird. Dabei wird ein Führungsdraht 86 durch die Durchgangsöffnungen 46 beider Anschluss- und Befestigungseinheiten 32 hindurchgeführt. Der Verbindungsleiter ist über ein Führungsseil 88 an dem Führungsdraht 86 befestigt, so dass der Verbindungsleiter durch Ziehen an dem Führungsdraht 86 bis zur gegenüberliegenden Durchgangsöffnung 46 bewegt werden kann.

### Liste der verwendeten Bezugszeichen:

- 10: Herstellungsform
- 12: Profilendkante
- 14: Profilnasenkante
- 16: erste Deckschicht
- 18: Hauptgurt
- 20: erster nasenkantenseitiger Einleger
- 22: zweiter nasenkantenseitiger Einleger
- 24: erster endkantenseitiger Einleger
- 26: zweiter endkantenseitiger Einleger
- 28: Blitzschutzleiter
- 30: Aussparung
- 32: Anschluss- und Befestigungseinheit
- 34: konische Umfangsfläche
- 36: Grundkörper
- 38: Anschlusskörper
- 40: Hohlraum
- 42: Blindstopfen
- 44: kreisförmige Fläche
- 46: Durchgangsöffnung
- 48: zweite Deckschicht
- 50: rohrförmiger Abschnitt
- 52: Innengewinde
- 54: Gewindebohrung
- 56: Verbindungsstück
- 58: Gewindebolzen
- 60: weitere Gewindebohrung
- 62: Halbschale
- 64: weitere Halbschale
- 66: Verbindungsleiter
- 68: Anschlussstück
- 69: Anschlussstück mit Außengewinde
- 70: Lochscheibe
- 71: Gewindescheibe
- 72: Gewindebolzen
- 73: Gewindebolzen
- 74: Distanzscheibe
- 76: Blitzrezeptor
- 78: rohrförmiger Abschnitt
- 80: Bohrung
- 82: Wandung
- 84: Führungsrohr
- 86: Führungsdraht
- 88: Führungsseil

## Patentansprüche

1. Verfahren zur Herstellung einer Potentialausgleichsverbindung zwischen zwei Komponenten einer Blitzschutzeinrichtung eines Windenergieanlagenrotorblatts, wobei das Verfahren die folgenden, in der angegebenen Reihenfolge auszuführenden Schritte aufweist:
a) Bereitstellen eines Windenergieanlagenrotorblatts, das zwei Rotorblatthalbschalen (62, 64) mit jeweils einer Anschluss- und Befestigungseinheit (32) aufweist, die mit einer der beiden Komponenten der Blitzschutzeinrichtung verbunden oder verbindbar ist, wobei im Inneren des Windenergieanlagenrotorblatts zwischen den beiden Anschluss- und Befestigungseinheiten (32) ein Freiraum ausgebildet ist,
b) Einführen eines Verbindungsleiters (66) von einer Außenseite des Windenergieanlagenrotorblatts aus durch eine Durchgangsöffnung (46) einer der beiden Anschluss- und Befestigungseinheiten (32) hindurch in das Innere des Windenergieanlagenrotorblatts,
c) Befestigen der beiden Enden des Verbindungsleiters (66) an jeweils einer der Anschluss- und Befestigungseinheiten (32), so dass der Verbindungsleiter (66) den Freiraum überbrückt.

2. Verfahren nach Anspruch 1, **dadurch gekennzeichnet, dass** der Schritt b) nach dem Verbinden der beiden Rotorblatthalbschalen (62, 64) miteinander ausgeführt wird.

3. Verfahren nach Anspruch 1 oder 2, **dadurch gekennzeichnet, dass** eine der beiden Komponenten ein Blitzrezeptor (76) ist, der nach dem Schritt c) an einer der Anschluss- und Befestigungseinheiten (32) befestigt und/oder damit verbunden wird.

4. Verfahren nach einem der Ansprüche 1 bis 3, **dadurch gekennzeichnet, dass** im Schritt a) die beiden Rotorblatthalbschalen (62, 64) miteinander verbunden werden, wobei mindestens eine der beiden Anschluss- und Befestigungseinheiten (32) zuvor in eine Wandung einer der Rotorblatthalbschalen (62, 64) eingebettet und mit einer der beiden Komponenten der Blitzschutzeinrichtung verbunden wurde.

5. Verfahren nach Anspruch 4, **dadurch gekennzeichnet, dass** beim Einbetten die mindestens eine Anschluss- und Befestigungseinheit (32) zwischen zwei Deckschichten (16, 48) der Wandung angeordnet wird.

6. Verfahren nach Anspruch 4 oder 5, **dadurch gekennzeichnet, dass** die eine der beiden Komponenten ein Blitzschutzleiter (28) ist, der in die Rotorblatthalbschale (62, 64) integriert ist, in die die mindestens Anschluss- und Befestigungseinheit (32) eingebettet ist.

7. Verfahren nach einem der Ansprüche 1 bis 6, **dadurch gekennzeichnet, dass** die im Schritt b) verwendete Durchgangsöffnung (46) von der Außenseite des Windenergieanlagenrotorblatts aus freigelegt wird, nachdem die Anschluss- und Befestigungseinheit (32), die die Durchgangsöffnung (46) aufweist, von der Außenseite des Windenergieanlagenrotorblatts aus lokalisiert wurde.

8. Verfahren nach Anspruch 7, **dadurch gekennzeichnet, dass** zum Freilegen der Durchgangsöffnung (46) ein luftdicht verschlossener Hohlraum (40) der Anschluss- und Befestigungseinheit (32), die die Durchgangsöffnung (46) aufweist, aufgebohrt wird.

9. Verfahren nach einem der Ansprüche 1 bis 8, **dadurch gekennzeichnet, dass** die andere der beiden Anschluss- und Befestigungseinheiten (32) ebenfalls eine Durchgangsöffnung (46) aufweist und im Schritt b) eines der beiden Enden des Verbindungsleiters (66) durch diese Durchgangsöffnung (46) hindurch wieder auf die Außenseite des Windenergieanlagenrotorblatts geführt wird.

10. Verfahren nach Anspruch 9, **dadurch gekennzeichnet dass** im Schritt b) zunächst ein Führungsrohr (84) durch die beiden Durchgangsöffnungen (46) hindurchgeführt wird, in dem der Verbindungsleiter (66) angeordnet ist oder durch das der Verbindungsleiter (66) vorgeschoben wird, wobei das Führungsrohr (84) anschließend wieder entfernt wird.

11. Verfahren nach Anspruch 9 oder 10, **dadurch gekennzeichnet dass** im Schritt b) zunächst ein Führungsdraht (86) oder ein Führungsseil (88) durch die beiden Durchgangsöffnungen (46) hindurchgeführt wird, mit dem der Verbindungsleiter (66) durch die beiden Durchgangsöffnungen (46) hindurchgeführt wird.

12. Verfahren nach einem der Ansprüche 1 bis 11, **dadurch gekennzeichnet, dass** eine Länge des Verbindungsleiter (66) so gewählt und die beiden Enden des Verbindungsleiters (66) im Schritt c) so befestigt werden, dass der an beiden Enden befestigte Verbindungsleiter (66) den Freiraum im Wesentlichen geradlinig überspannt.

13. Verfahren nach einem der Ansprüche 1 bis 12, **dadurch gekennzeichnet, dass** die beiden Enden des Verbindungsleiters (66) im Schritt c) von der Außenseite des Windenergieanlagenrotorblatts aus an jeweils einer der beiden Anschluss- und Befestigungseinheiten (32) befestigt werden.

14. Verfahren nach einem der Ansprüche 1 bis 13, **dadurch gekennzeichnet, dass** im Schritt c) mindestens eines der beiden Enden des Verbindungsleiters (66) mit einer Lochscheibe (70) verschraubt wird, deren Durchmesser größer ist als die Durchgangsöffnung (46) und die an einer Außenseite der betreffenden Anschluss- und Befestigungseinheit (32) anliegt.

15. Verfahren nach Anspruch 14, **dadurch gekennzeichnet, dass** eine oder mehrere Distanzscheiben (74) zwischen der Lochscheibe (70) und der betreffenden Anschluss- und Befestigungseinheit (32) angeordnet werden.

## Claims

1. A method for producing an equipotential bonding connection between two components of a lightning protection device of a wind turbine rotor blade, wherein the method comprises the following steps which are to be carried out in the specified order:
a) providing a wind turbine rotor blade, which comprises two rotor blade half shells (62, 64), each with a connection and fastening unit (32) which is connected or connectable to one of the two components of the lightning protection device, wherein a space is realized in the interior of the wind turbine rotor blade between the two connection and fastening units (32),
b) inserting a connection conductor (66) from an outside surface of the wind turbine rotor blade through a through opening (46) in one of the two connection and fastening units (32) into the interior of the wind turbine rotor blade,
c) fastening each of the two ends of the connection conductor (66) to one of the connection and fastening units (32) such that the connection conductor (66) bridges the space.

2. The method as claimed in claim 1, wherein the step b) is carried out once the two rotor blade half shells (62, 64) have been connected together.

3. The method as claimed in claim 1 or 2, wherein one of the two components is a lightning receptor (76) which after step c) is fastened on one of the connection and fastening units (32) and/or is connected thereto.

4. The method as claimed in one of claims 1 to 3, wherein in step a) the two rotor blade half shells (62, 64) are connected together, wherein at least one of the two connection and fastening units (32) has been embedded beforehand in a wall of one of the rotor blade half shells (62, 64) and has been connected to one of the two components of the lightning protection device.

5. The method as claimed in claim 4, wherein the at least one connection and fastening unit (32) is arranged between two cover layers (16, 48) of the wall during the embedding process.

6. The method as claimed in claim 4 or 5, wherein the one of the two components is a lightning protector conductor (28), which is integrated into the rotor blade half shell (62, 64), in which the at least one connection and fastening unit (32) is embedded.

7. The method as claimed in one of claims 1 to 6, wherein the through opening (46) used in step b) is exposed from the outside of the wind turbine rotor blade once the connection and fastening unit (32), which comprises the through opening (46), has been located from the outside of the wind turbine rotor blade.

8. The method as claimed in claim 7, wherein a cavity (40), which is closed in an air-tight manner, of the connection and fastening unit (32), which comprises the through opening (46), is bored out for exposing the through opening (46).

9. The method as claimed in one of claims 1 to 8, wherein the other of the two connection and fastening units (32) also comprises a through opening (46) and in step b) one of the two ends of the connection conductor (66) is guided through said through opening (46) onto the outside of the wind turbine rotor blade again.

10. The method as claimed in claim 9, wherein in step b) a guide tube (84) is first of all guided through the two through openings (46), in which guide tube the connection conductor (66) is arranged or through which guide tube the connection conductor (66) is pushed forward, the guide tube (84) then being removed again.

11. The method as claimed in claim 9 or 10, wherein in step b) a guide wire (86) or a guide cable (88) is first of all guided through the two through openings (46), by way of which guide wire or guide cable the connection conductor (66) is guided through the two through openings (46).

12. The method as claimed in one of claims 1 to 11, wherein in step c) a length of the connection conductor (66) is chosen in such a manner and the two ends of the connection conductor (66) are fastened in such a manner that the connection conductor (66), which is fastened at both ends, spans the space in a substantially straight-lined manner.

13. The method as claimed in one of claims 1 to 12, wherein in step c) the two ends of the connection conductor (66) are fastened in each case from the outside of the wind turbine rotor blade to one of the tw61250o connection and fastening units (32).

14. The method as claimed in one of claims 1 to 13, wherein in step c) at least one of the two ends of the connection conductor (66) is screw-connected to a perforated disk (70), the diameter of which is greater than the through opening (46) and which abuts against an outside surface of the relevant connection and fastening unit (32).

15. The method as claimed in claim 14, wherein one or multiple spacers (74) are arranged between the perforated disk (70) and the relevant connection and fastening unit (32).

## Revendications

1. Procédé pour la réalisation d'une liaison équipotentielle entre deux composants d'un dispositif paratonnerre d'une pale de rotor d'éolienne, le procédé présentant les étapes suivantes, à exécuter dans l'ordre indiqué :
a) mise à disposition d'une pale de rotor d'éolienne présentant deux demi-coques de pale de rotor (62, 64) comprenant respectivement une unité de fixation et de raccordement (32) reliée ou apte à être reliée à l'un des deux composants du dispositif paratonnerre, un espace libre étant formé à l'intérieur de la pale de rotor d'éolienne, entre les deux unités de fixation et de raccordement (32),
b) introduction d'un conducteur de liaison (66) dans la pale de rotor d'éolienne depuis un côté extérieur de la pale de rotor d'éolienne à travers une ouverture de passage (46) de l'une des deux unités de fixation et de raccordement (32),
c) fixation des deux extrémités du conducteur de liaison (66) respectivement à l'une des unités de fixation et de raccordement (32), de telle façon que le conducteur de liaison (66) enjambe l'espace libre.

2. Procédé selon la revendication 1, **caractérisé en ce que** l'étape b) est exécutée après l'assemblage des deux demi-coques de pale de rotor (62, 64) entre elles.

3. Procédé selon la revendication 1 ou 2, **caractérisé en ce que** l'un des deux composants est un récepteur de foudre (76), lequel est fixé à l'une des unités de fixation et de raccordement (32) et/ou relié à celle-ci après l'étape c).

4. Procédé selon l'une des revendications 1 à 3, **caractérisé en ce que** dans l'étape a), les deux demi-coques de pale de rotor (62, 64) sont reliées entre elles, dans lequel l'une au moins des deux unités de fixation et de raccordement (32) est tout d'abord incorporée dans une paroi de l'une des demi-coques de pale de rotor (62, 64) et reliée à l'un des deux composants du dispositif paratonnerre.

5. Procédé selon la revendication 4, **caractérisé en ce que** lors de l'incorporation, l'au moins une unité de fixation et de raccordement (32) est disposée entre deux couches de revêtement (16, 48) de la paroi.

6. Procédé selon la revendication 4 ou 5, **caractérisé en ce que** l'un des deux composants est un conducteur de dispositif paratonnerre (28), lequel est intégré dans la demi-coque de pale de rotor (62, 64) dans laquelle est incorporée l'au moins une unité de fixation et de raccordement (32).

7. Procédé selon l'une des revendications 1 à 6, **caractérisé en ce que** l'ouverture de passage (46) employée dans l'étape b) est dégagée depuis le côté extérieur de la pale de rotor d'éolienne, après localisation de l'unité de fixation et de raccordement (32) présentant l'ouverture de passage (46) depuis le côté extérieur de la pale de rotor d'éolienne.

8. Procédé selon la revendication 7, **caractérisé en ce qu'**un espace creux fermé hermétiquement (40) de l'unité de fixation et de raccordement (32) présentant l'ouverture de passage (46) est percé pour dégager l'ouverture de passage (46).

9. Procédé selon l'une des revendications 1 à 8, **caractérisé en ce que** l'autre des deux unités de fixation et de raccordement (32) présente également une ouverture de passage (46) et dans l'étape b), l'une des deux extrémités du conducteur de liaison (66) est guidée à travers cette ouverture de passage (46) et renvoyée vers le côté extérieur de la pale de rotor d'éolienne.

10. Procédé selon la revendication 9, **caractérisé en ce que** dans l'étape b), un tuyau de guidage (84) dans lequel est disposé le conducteur de liaison (66) ou à travers lequel le conducteur de liaison (66) est poussé vers l'avant est tout d'abord guidé à travers les deux ouvertures de passage (46), le tuyau de guidage (84) étant ensuite retiré.

11. Procédé selon la revendication 9 ou 10, **caractérisé en ce que** dans l'étape b), un fil de guidage (86) ou un câble de guidage (88) permettant de guider le conducteur de liaison (66) à travers les deux ouvertures de passage (46) est guidé tout d'abord à travers les deux ouvertures de passage (46).

12. Procédé selon l'une des revendications 1 à 11, **caractérisé en ce qu'**une longueur du conducteur de liaison (66) est sélectionnée et les deux extrémités du conducteur de liaison (66) sont fixées de telle façon à l'étape c), que le conducteur de liaison (66) fixé par les deux extrémités chevauche l'espace libre de façon essentiellement rectiligne.

13. Procédé selon l'une des revendications 1 à 12, **caractérisé en ce que** dans l'étape c), les deux extrémités du conducteur de liaison (66) sont fixées respectivement à l'une des deux unités de fixation et de raccordement (32) depuis le côté extérieur de la pale de rotor d'éolienne.

14. Procédé selon l'une des revendications 1 à 13, **caractérisé en ce que** dans l'étape c), l'une au moins des deux extrémités du conducteur de liaison (66) est vissé à l'aide d'un disque perforé (70), dont le diamètre est supérieur à l'ouverture de passage (46) et lequel s'applique sur un côté extérieur de l'unité de fixation et de raccordement (32) correspondante.

15. Procédé selon la revendication 14, **caractérisé en ce qu'**un ou plusieurs disques d'espacement (74) est/sont disposé(s) entre le disque perforé (70) et l'unité de fixation et de raccordement (32) correspondante.
